# EUROPEAN PATENT APPLICATION

(11) **EP 2 592 611 A1**
(43) Date of publication of application: **15.05.2013**
(21) Application number: 12192054.0
(22) Date of filing: 09.11.2012
(51) Int. Cl.: G09B 9/00

(54) **Hazardous device detection training system**

(30) Priority: 11.11.2011 GB 201119456
(71) Applicant: COBHAM CTS LTD, Leatherhead Surrey KT22 7SA (GB)
(72) Inventor: Pearson, Robert, Farnham, Surrey GU10 2ED (GB); Graham, Blair, Leatherhead, Surrey KT22 8TT (GB); Gardner, Neil James, Crawley, Surrey RH10 7HW (GB)
(74) Representative: Haley, Stephen

(57) **Abstract**

The present invention involves the extension of the well known technique of virtual reality to encompass the use of virtual or real sensors as a means of detecting virtual threats including mines and improvised explosive devices in complex threat environments and to allow fully immersive computer based basic training, pre-deployment training or mission specific training. It also allows the development of techniques, tactics and procedures in a representative environment to improve the effectiveness of operations and to explore a range of scenarios which might be experienced in real life by an individual or a group of personnel using sensors including both handheld sensors and sensors mounted on machines including robotic platforms to detect the presence of threats.

## Description

The present invention relates to a system for simulating a user environment in which a sensor or detector is used operationally for the location detection and marking of mines, improvised explosive devices, ammunition or arms or other similar threats.

Virtual reality (VR) training systems are themselves reasonably well-known. For example, such systems have been disclosed for training purposes in sea mine disposal based on physical search. Other known systems are used for remote hazardous incident training for emergency services personnel including the remote operation of a vehicle in military situations or landmine clearance training using wireless physical simulated landmines and the remote operation of a robotic arm vehicle for clearing landmines. Such systems are considered the closest art to the present invention in terms of disclosing VR or remote operation systems for use in hazardous land-based or littoral environments.

However, none of these prior art systems employ simulated virtual threats whose characteristics are detected using virtual sensors.

A number of systems with differing types of sensors are used for improvised explosive device (IED) detection. Whilst a number of sensors can prove effective in counter IED detection and in the clearance of landmines as well as in counter terrorism and operations to search locations in civil as well as conflict or post conflict scenarios, they rely on the effective training and operation by the user of the sensor for maximum effectiveness. This in turn requires significant levels of training and demanding levels of concentration to ensure that swept ground is covered sufficiently, objects are not missed and false alarms are minimised. The creation of such environments with representative threat scenarios and the provision of representative devices is expensive and time consuming. The location of these threats can also be learned by students, thus making objective training and assessment problematic. The present invention allows a systematic training environment which enables objective assessment of the effectiveness of the operators, reduces the training burden and maximises their overall future operational effectiveness.

According to the present invention there is provided a system for simulating the operation of a sensor for detecting a device, the system comprising:
means for generating a virtual environment and for providing data relating to the environment to a user;
a physical interface device representing the sensor and receiving input from a user so that the user can interact with the virtual environment; and
means for receiving input from the physical interface device and for interacting with the virtual environment generating means to produce a virtual representation of the sensor in the virtual environment, the virtual representation including the manner of operation of the sensor provided in the virtual representation.

An example of the present invention will now be described with reference to the figures, in which:
Figure 1 is virtual sensor in a virtual environment in which the operator experiences the virtual threat as if they were using a real detector;
Figure 2 is a representation of an area being searched by the detector, showing the track of the virtual sensor and the location of virtual threats (left hand side) and a transparent ground showing a representation of the virtual sensor and virtual threats (right hand side) which indicate to the user a means of ensuring that the detector is level, moved at the right speed and separation from the ground for optimal use;
Figure 3 shows the same representation of an area as figure 2 (left hand side) and a virtual vehicle and robot with radar sensors (right hand side);

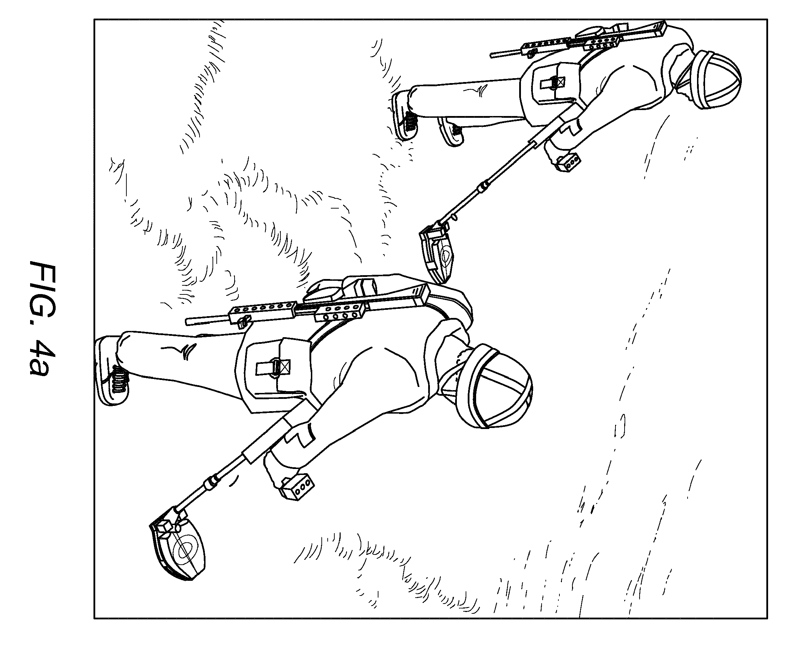

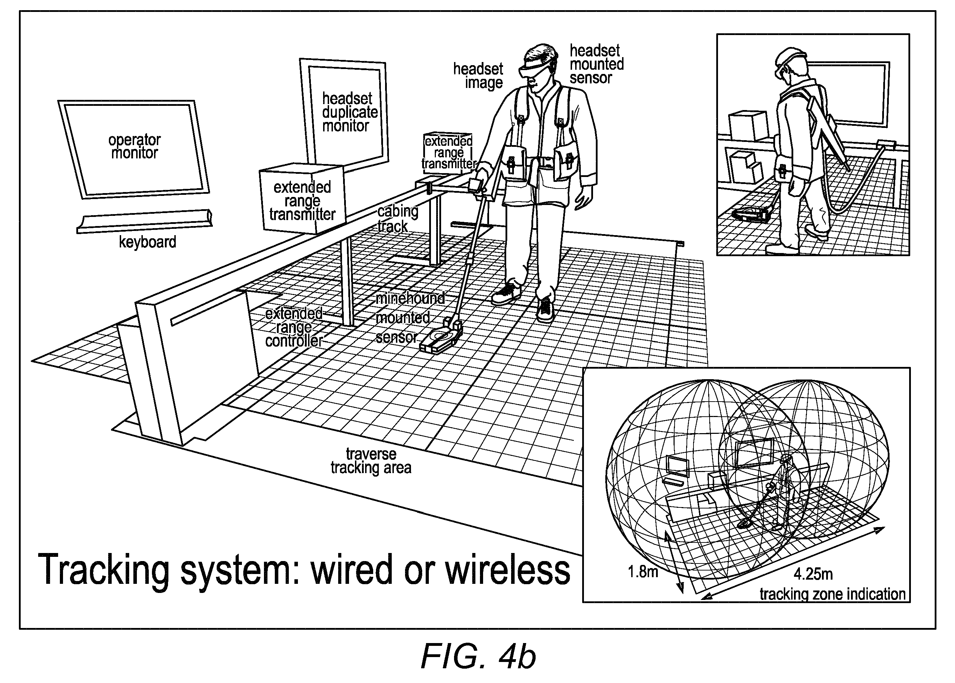

Figure 4a shows an illustration of a co-operative training version of the present invention in which the users do not need headsets since the users are themselves in a real world environment, but the sensors respond to the virtual environment. Figure 4b shows a person wearing a headset to simulate a realistic visual virtual environment. In this virtual environment, the surroundings, the sensor interface and the threats, including ground signs such as disturbed ground marks that could visually alert the user to the potential of a threat, are all virtual. The example of the present invention depicted in figure 4b could be used in a scenario with a single user as shown or in a co-operative training environment as demonstrated by the example in figure 4a.
Figure 5 shows a virtual representation of a typical headset used for fully immersive virtual sensor reality training.

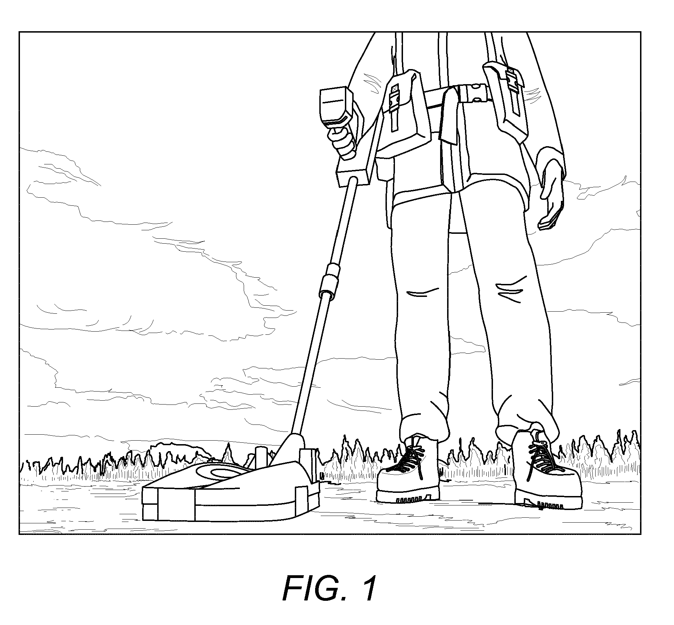

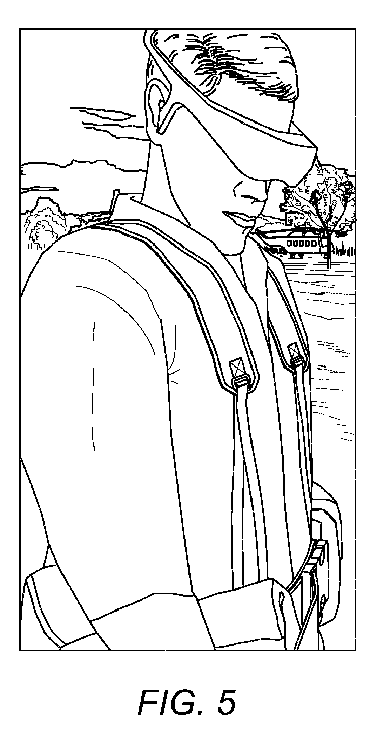

In one example, the invention provides a virtual environment that is fully visually immersive through the use of a headset or equivalent means of displaying the virtual environment to the user in which the user uses a dummy or real detector either directly or through interface to a remotely operated sensor, for example, mounted on a robotically controlled platform. An example of such a headset is shown in figure 5. In another example, the invention provides an augmented environment that is partially visually immersive through the use of a visor or equivalent means of displaying the augmented environment to the user in which the user uses a dummy or real detector. For example, the augmented reality could involve the superposition of virtual objects onto the user's vision of the real environment. In another example, the invention provides a real environment in which the user may be alerted to virtual threats through the use of a dummy or real detector. In addition to the potential physical headset or visor, the system also comprises a physical interface device that the user operates to interact with the virtual environment. In the example of figure 1, this is a device configured to represent a handheld mine detector. This device normally has a location and/or motion detection system associated with it so that the training system can detect the device's position and/or movement and represent this within the virtual environment that it generates. The position of the sensor is monitored by a location sensor such that it is possible to make the sensor respond to the environment and threats emplaced within it as if it were a real sensor responding to a real environment, thus allowing the user real-time interaction with the virtual surroundings as shown in figure 1. In this example, a virtual landmine detector is generated by the system of the invention and its operation is simulated to operate in the same way as a real detector might, with variations in sensitivity and detection output dependent on the terrain which is being simulated and the nature of the device to be detected, all of which is portrayed to the user.

The system operates in a manner which closely represents the behaviour of a real detector responding to a real target. It could also generate, in the headset or visor, an image which represents the terrain being simulated but including the ability to make the ground or other real opaque features, such as a wall, to be represented in three dimensions as an opaque or transparent feature in a representative environment. The system can embed measured, simulated or a combination of measured and simulated sensor responses to virtual stimuli to replicate the behaviour of real sensors and real targets within the virtual sensor reality environment. The system of the invention allows initial and mission training and has access to reference environments and devices for the generation of a number of scenarios. It is also capable of receiving and processing updates and can enable the definition of complex scenarios. It also allows operation of the sensor in such an environment to allow playback analysis and guidance to the students and users as to how to move the detector in order to optimise the use of the detector. The virtual environment allows the simulation of different terrains, including soil types, false targets and weather conditions including snow and water. It also allows techniques, tactics and procedures to be developed as new threats are identified and characterised.

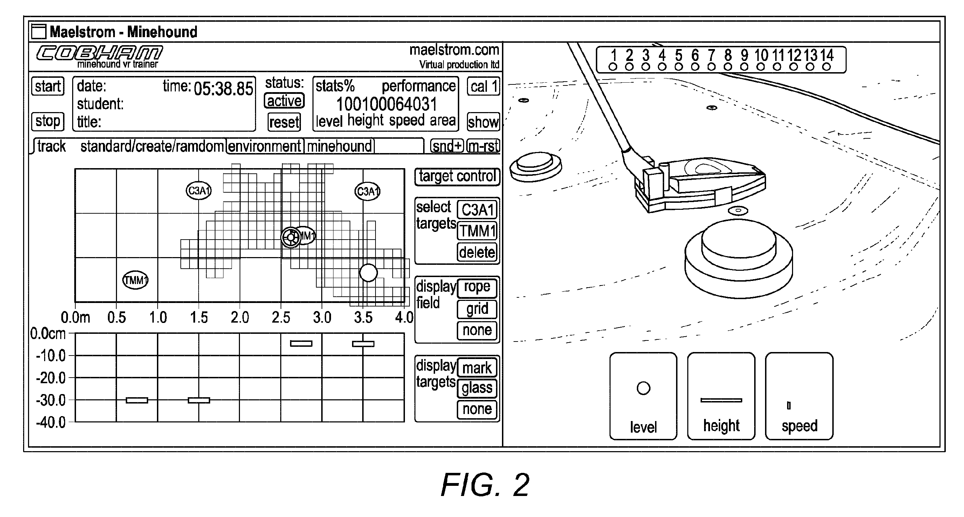

A key aspect of the virtual reality approach is the ability to let the user either mask the ground and sweep for buried threats in the way they would in usual operation or to work with a transparent or semi-transparent representation of a feature that would otherwise conceal the virtual threat. Within the virtual environment, it is possible to switch the virtual representation of the ground or other features such as a wall to be semi-transparent so that a mine or IED or other threat can be viewed in-situ by a person using the system to aid correlation of the sensor response with the true location of the threat as shown in figure 2. In figure 2, there is a representation of the area being searched showing the track of the virtual sensor and the location of virtual threats (left hand side) and transparent ground showing a representation of a virtual sensor and virtual threats (right hand side) showing indication to the user a means of ensuring that the detector is level, moved at the right speed and separation from the ground for optimal use.

The system can be configured to provide a virtual representation indicating the path and area over which the virtual sensor has traversed. This can provide feedback either in real time or as feedback to the operator of the invention, such as a student or instructor, and also allow quantitative assessment of the probability of detection of a threat or false alarm rate or concealed target or false target based on the area covered. It can also provide feedback on the system settings used and the speed and orientation of the sensor or other attributes which dictate its effectiveness in operation so as to improve operator effectiveness or to compare the capabilities of different sensors or settings or search procedures or risk factors or as part of developing tactics, techniques and procedures.

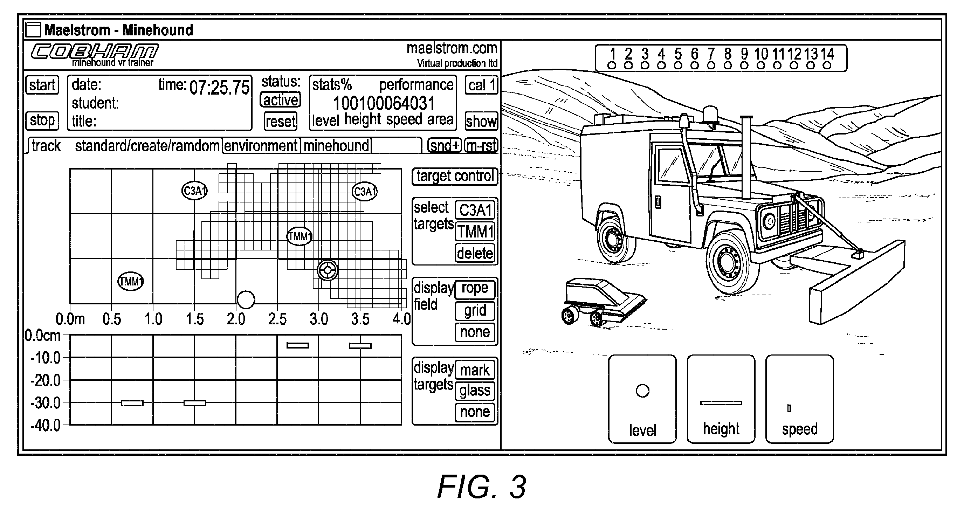

Figure 3 shows how the system of the invention can be employed for simulating vehicle mounted or robot mounted detection systems in a similar fashion to the handheld detectors as shown in figure 1.

Additionally it is possible to link multiple users together within a virtual space as shown in figure 4; these users can share information between them or send information to a central node for performance evaluation purposes. Equally, a single user or a number of users can interact with a number of virtual users within the virtual space. Of course, this could also be applied to the vehicle and robot mounted examples of figure 3.

Efficiency of training in the use of such systems which are safety critical and used in the clearance of land mines and other threats is absolutely vital. The invention offers the ability to significantly increase the effectiveness of training using virtual sensors in a VR environment. The invention allows training against a range of existing and new threats and includes the development of training techniques and procedures.

The invention also allows training against new targets and scenarios to be undertaken; once data on a single threat has been characterised and recorded in the form of a datafile or entry of characteristics in a database for use with the system this can be transmitted and uploaded to the system and used for training elsewhere or in multiple locations as new threats emerge.

The concept is applicable too as an aid to training personnel in the operation of such sensors either individually and directly by personnel or remotely through use of wireless or wired operation and monitoring, whether static or mobile. Application of the invention is envisaged primarily for land and littoral operations either alone or in collaboration with other personnel, either with single or multiple sensors either individually or in the form of a collaborative application. The concept is applicable to a multiplicity of types of sensors and deployment scenarios including, for example, hazardous or remote environments to aid real operational use particularly where the personnel are remote from the locality of the sensor and whereby the application of the virtual sensor will aid the efficacy of the use of the sensor and for which setting up realistic training scenarios is complex and costly.

In addition to handheld, ground penetrating or other sensors including through wall sensors, the technique is applicable to other sensors including metal detector or current flow or magnetometers or non linear junction or chemical or biological or radioactivity or nuclear or acoustic or sonar or radar or optical or hyperspectral or infrared sensors. The technique is also applicable to multi-sensor or multi-spectral sensors and to both close-in and stand-off modes of operation.

The invention allows users to play back their performance including showing the user's search track and desired sweep pattern overlaid in their vision or assist the trainer to assess the user by displaying the results on another display. It will also allow quantitative assessment of search effectiveness in a scenario or between scenarios of equivalent complexity but different threat emplacements to avoid students learning scenarios.

## Claims

1. A system for simulating the operation of a sensor for detecting a device, the system comprising:
means for generating a virtual environment and for providing data relating to the environment to a user;
a physical interface device representing the sensor and receiving input from a user so that the user can interact with the virtual environment; and
means for receiving input from the physical interface device and for interacting with the virtual environment generating means to produce a virtual representation of the sensor in the virtual environment, the virtual representation including the manner of operation of the sensor provided in the virtual representation.

2. The system of claim 1, wherein the sensor is of the type arranged to detect at least one of mines or improvised explosive devices.

3. A system of claim 1, wherein the sensor is of the type arranged to detect at least one of ammunition, arms, narcotics, nuclear material, radiological material, biological or chemical weaponry.

4. The system of claim 2 or 3, wherein the sensor is a handheld device.

5. The system of claim 4, wherein the physical interface device is a real sensor of the type being simulated.

6. The system of claim 2 or 3, wherein the sensor is mounted on a vehicle or a robot.

7. The system of any preceding claim wherein the sensor is an array of sensors.

8. The system of any preceding claim wherein the data relating to the virtual environment includes the data representing the location of at least one virtual device representing a device of the type to be detected by the sensor being simulated.

9. The system of any preceding claim, wherein the means for generating a virtual environment generates the environment with reference to a database comprising data for the simulation of different terrains including soil types and false targets and weather conditions including snow and ground water conditions.

10. The system according claim 9, wherein the database can be updated by a trainer and in which one or more devices to be detected can be placed or relocated by a trainer.

11. The system of any preceding claim comprising a plurality of physical interface devices, such that the virtual environment can be shared between and interacted with by multiple users or operators.

12. The system of any preceding claim, wherein the manner of operation of the virtual representation of the sensor is varied dependent upon the virtual environment to reflect effects comprising at least one of reflection, refraction, multipath, attenuation or other scattering from a target or environment.

13. The system of any preceding claim, wherein the data relating to the virtual environment includes image data representing the virtual environment and wherein the system further comprises means for providing that image data to a user.

14. The system of any preceding claim wherein the means for generating data for the environment further generates at least one of an audible, tactile, odour or taste-based data for provision to the user.

15. The system of claim 13 or 14, wherein the data is used to augment the interaction of a user with the virtual environment.

16. The system of claim 13, 14 or 15, wherein the means for generating an image generates an image showing the user a virtual representation of features of the device being detected to aid them in understanding how the sensor responds.

17. The system of claims 13 to 16, wherein the means for generating an image generates an image showing the user a virtual representation indicating the path and area which the virtual sensor has traversed.
